# EUROPÄISCHE PATENTSCHRIFT

(11) **EP 3 164 297 B1**
(45) Veröffentlichungstag und Bekanntmachung des Hinweises auf die Patenterteilung: **12.07.2023**
(21) Anmeldenummer: 15722543.4
(22) Anmeldetag: 18.05.2015
(51) Int. Cl.: B60Q 1/04, B60Q 1/46

(54) **MONTAGEVERBUND EINER KRAFTFAHRZEUG-BELEUCHTUNGSEINRICHTUNG**
COMPOSITE ASSEMBLY OF A MOTOR VEHICLE LIGHTING SYSTEM
ENSEMBLE DE MONTAGE D'UN DISPOSITIF D'ÉCLAIRAGE D'UN VÉHICULE AUTOMOBILE

(30) Priorität: 03.07.2014 DE 102014212894; 18.09.2014 DE 102014218733
(43) Veröffentlichungstag der Anmeldung: 10.05.2017
(60) Teilanmeldung: 22210428.3
(73) Patentinhaber: Volkswagen Aktiengesellschaft, 38440 Wolfsburg (DE)
(72) Erfinder: SIMANEK, Ralf, 38518 Gifhorn (DE); LOOSE, Christoph, 38106 Braunschweig (DE)
(86) Internationale Anmeldenummer: PCT/EP2015/060835
(87) Internationale Veröffentlichungsnummer: WO 2016/000866

(56) Entgegenhaltungen:
- EP-A2- 2 565 079
- CN-U- 202 966 097
- DE-A1-102005 045 684
- DE-A1-102013 012 227
- JP-A- 2001 270 381
- US-A- 3 385 617

## Beschreibung

Die Erfindung betrifft einen Montageverbund einer Kraftfahrzeug-Beleuchtungseinrichtung mit den Merkmalen vom Oberbegriff des Patentanspruchs 1.

Derartige Montageverbunde sind bereits aus dem allgemeinen Stand der Technik bekannt. Dabei ist das Anbauteil zumeist in Form einer leistenartigen Zierblende ausgebildet. Der Einsatz von Zierblenden bei Kraftfahrzeug-Beleuchtungseinrichtungen soll zu einer optischen Aufwertung des Erscheinungsbildes führen.

Abschlussscheiben von Beleuchtungseinrichtungen, wie beispielsweise von Scheinwerfern oder Rückleuchten, werden zumeist aus Polymethylmethacrylat (PMMA) oder Polycarbonat (PC) im Spritzgießprozess hergestellt. Insbesondere Polycarbonat ist generell spannungsgefährdet. Durch eine Befestigung eines Anbauteils, beispielsweise einer Zierblende, an Befestigungsdomen der Beleuchtungseinrichtungen (beispielsweise durch Verschraubung) werden zusätzliche Spannungen in das Material eingebracht. Im Zusammenspiel mit spannungsrissauslösenden Medien (z. B. Scheibenreiniger in einer Waschstraße) kann es zum Reißen des Materials im Bereich der Befestigungsdome kommen. Eine Beleuchtungseinrichtung mit einem solchen Schadensbild muss komplett ausgetauscht werden.

Aus der die Merkmale des Oberbegriffs von Patentanspruch 1 aufweisenden CN 202 966 097 U ist eine Befestigungsstruktur einer Nebelleuchte bekannt. Die Befestigungsstruktur besteht aus einer vorderen, rahmenartigen Stoßfängerabdeckung, einer Abdeckscheibe für die Nebelleuchte und aus der Nebelleuchte selbst. Konkret ist die Abdeckscheibe an Schraubstellen der Stoßfängerabdeckung mit dieser verbunden. Die Nebelleuchte ist dann über Montage- und Fixierlaschen an Schraubdomen der Abdeckscheibe gehalten. Eine endgültige Fixierung der Nebelleuchte mitsamt Abdeckscheibe erfolgt schließlich über eine Verschraubung.

In der DE 298 01 901 U1 wird ein Montageverbund eines Kraftfahrzeug-Scheinwerfers beschrieben, bei der eine Zierblende über ein in einer Ausbuchtung der Zierblende aufgenommenes Formstück am Scheinwerfer befestigt wird. Das Formstück selbst ist auf den oberen Rand der Abschlussscheibe aufgeklebt. Eine solche Lösung erscheint hinsichtlich der Langzeitstabilität des Montageverbundes nicht zuverlässig zu sein.

Die DE 10 2013 012 227 A1 offenbart eine Fahrzeugleuchte zur Montage an einem Karosseriebauteil eines Kraftfahrzeugs. Unter anderem wird zu diesem Zweck vorgeschlagen, an eine Abschlussscheibe der Fahrzeugleuchte einen mehrwandigen Vorsprung anzuspritzen. Der Vorsprung weist montageseitig eine rechteckige Aussparung auf, in die eine Haltenase des Karosseriebauteils einrastbar ist. Die Haltenase ragt insbesondere aus einem die Haltenase beherbergenden Führungsprofil des Karosseriebauteils heraus.

Der EP 2 565 079 A2 ist eine Fahrzeugleuchte zu entnehmen, an deren Abschlussscheibe innenseitig ein Anbauteil in Form eines elektromagnetischen Vibrators angebracht ist. Der elektromagnetische Vibrator ist über Schrauben mit zwei Befestigungsdomen der Abschlussscheibe verschraubt. Zudem wird vorgeschlagen, zwischen dem elektromagnetischen Vibrator und den Befestigungsdomen jeweils eine Abstandsscheibe aus dämpfendem Material (Gummi) anzuordnen.

In der DE 10 2005 045684 A1 ist eine Abdeckscheibe eines Scheinwerfers offenbart. In der Abdeckscheibe ist eine Abdeckrahmen mit Aufnahmeöffnungen für drei Lichtmodule gehalten. Die Abdeckscheibe ist über obere, untere und seitliche Verbindungselemente starr mit dem Abdeckrahmen verbunden. Die Befestigungselemente sind an dem Abdeckrahmen und/oder an der Abdeckscheibe angeformt. Die unteren Verbindungselemente sind durch schraubbare Verbindungen realisiert. Konkret weist die Abdeckscheibe dafür eine angeformte Schraubaufnahme auf, die kegelförmig ausgebildet ist. Die Schraubaufnahme wird durch ein Element einer Lasche übergriffen und an der Schraubaufnahme festgeschraubt.

In der US 3 385 617 A wird ein Montageverbund aus zwei Kunststoffteilen beschrieben. Eines der Kunststoffteile ist als Schraubdom ausgebildet, in den eine Befestigungsschraube eingreift. Des Weiteren ist ein kappenartiges Teil offenbart, welches den Schraubdom von außen übergreift und so ausgebildet ist, dass es von außen in den Schraubdom eindringt und sich beim Drehen der Befestigungsschraube nicht mitdreht.

Schließlich offenbart die JP 2001 270381 A eine Montageanordnung zur einfachen Abdichtung eines horizontalen Spaltes zwischen einem Scheinwerfer und einer angrenzenden Motorhaube, bei der eine Dichtung als Anbauteil für den Scheinwerfer bzw. dessen Abschlussscheibe fungiert. Die Dichtung umfasst ein schwammartiges Dichtungsteil, welches an ein Befestigungsteil angespritzt ist. Im Befestigungsteil ist eine Ausnehmung mit Montagekrallen vorhanden. Zur Montage wird die Dichtung mit dem Befestigungsteil über einen nach oben stegartig hervorstehenden Befestigungsansatz der Abschlussscheibe vom Scheinwerfer gedrückt und hakt sich daran fest.

Der vorliegenden Erfindung liegt die Aufgabe zu Grunde, einen Montageverbund mit den Merkmalen vom Oberbegriff des Patentanspruchs 1 derart zu verbessern, dass der Montageverbund eine hohe Widerstandsfähigkeit und Langzeitstabilität aufweist, welcher insbesondere auch bei Kontakt des Kraftfahrzeugs mit spannungsrissauslösenden Flüssigkeiten keinen Schaden nimmt.

Vorstehend genannte Aufgabe wird durch die Merkmale von Patentanspruch 1 gelöst. Vorteilhafte Ausbildungen beziehungsweise Weiterbildungen der Erfindung sind den Unteransprüchen entnehmbar.

Die Erfindung geht aus von einem Montageverbund einer Kraftfahrzeug-Beleuchtungseinrichtung, mit einem an einer Abschlussscheibe befestigten Anbauteil. Das Anbauteil kann beispielsweise eine Zierblende sein. Eine solche wird zumeist im oberen Bereich der Abschlussscheibe befestigt. Dies ist jedoch nicht zwingend. Das Anbauteil kann auch an einer anderen Stelle der Abschlussscheibe, beispielsweise im unteren Bereich befestigt werden. Zur zumindest mittelbaren Befestigung des Anbauteils weist die Abschlussscheibe wenigstens einen angeformten Befestigungsdom auf. In den Befestigungsdom greift ein Befestigungselement ein. Dies kann auf vielfältige Art und Weise geschehen. Beispielsweise kann eine Verschraubung oder auch eine Verrastung vorgesehen sein.

Als ein Merkmal der Erfindung wird nun vorgeschlagen, dass der wenigstens eine Befestigungsdom mit einem kappenartigen Element überdeckt ist.

Es hat sich in Versuchen gezeigt, dass durch diese Maßnahme die Widerstandsfähigkeit und die Langzeitstabilität des Montageverbundes deutlich erhöht werden kann.

Gemäß weiteren Merkmalen der Erfindung ist der Befestigungsdom, in einer Draufsicht gesehen, von einer um den Befestigungsdom umlaufenden Rippe umgeben. Dies erfolgt derart, dass eine umlaufende, rillenartige Vertiefung ausgebildet wird, in die das kappenartige Element teilweise hineinragt. Es hat sich gezeigt, dass auf diese Weise ein noch besserer Schutz des Montageverbundes erzielt werden kann.

Das kappenartige Element kann dadurch besser am Umfang des Befestigungsdoms gehalten werden.

Dieser Effekt kann noch dadurch verstärkt werden, wenn die rillenartige Vertiefung in ihrer Breite zum Vertiefungsgrund hin abnimmt.

Alternativ, jedoch nicht von der Erfindung umfasst, ist jedoch auch denkbar, dass der Befestigungsdom, in einer Draufsicht gesehen, von einer um den Befestigungsdom umlaufenden Rippe umgeben ist, auf der sich das kappenartige Element stirnseitig abstützt. Das kappenartige Element wird also bei Befestigung des Anbauteils auf diese Rippe aufgedrückt und dadurch stirnseitig gequetscht. Dies führt gleichermaßen zu einer guten Abdichtung in diesem Bereich.

Dabei hat es sich als vorteilhaft erwiesen, wenn das kappenartige Element aus einem gummielastischen Werkstoff ist.

Gemäß einer anderen Ausbildung des Erfindungsgedankens kann das Anbauteil an einem Träger befestigt sein, welcher durch das Befestigungselement am Befestigungsdom gehalten wird. In diesem Fall ist das Anbauteil also mittelbar am Befestigungsdom befestigt. Das Anbauteil selbst kann mit dem Träger beispielsweise verclipst sein.

Durch diese Maßnahme der Aufteilung in einen Träger und das eigentliche Anbauteil kann der Herstellungsprozess vereinfacht werden.

Nach einer weiteren Ausbildung der Erfindung kann der Träger mit einem dem Befestigungsdom zugewandten, umlaufenden Absatz versehen sein, welcher auf dem kappenartigen Element aufliegt.

Auf diese Weise kann bei der Befestigung von oben ein zusätzlicher Druck auf die Stirnseite des Befestigungsdoms ausgeübt werden und die Schutzwirkung des kappenartigen Elementes verstärkt werden.

Um auftretende Freiräume zwischen dem Träger und dem Anbauteil optimal abdecken zu können, schlägt eine andere Ausbildung der Erfindung vor, dass durch das Befestigungselement wenigstens ein Dichtelement mit wenigstens einer harten und wenigstens einer weichen Komponente gehalten wird. Dabei dichtet das Dichtelement mit seiner weichen Komponente das Anbauteil gegen den Träger ab. Die harte Komponente des Dichtelementes ist zwischen einem Kopf des Befestigungselementes und dem kappenartigen Element angeordnet.

Dadurch ist über das Dichtelement eine gute Weiterleitung von Befestigungskräften möglich.

Um oberseitig eine Dichtwirkung zu erhöhen, kann zwischen dem Kopf des Befestigungselementes und der harten Komponente des Dichtelementes ein Dichtring (vorzugsweise aus gummiartigen Material) angeordnet sein.

Schließlich wird mit der Erfindung auch ein Kraftfahrzeug beansprucht, welches mit wenigstens einem erfindungsgemäßen Montageverbund ausgestattet ist.

Dabei kann der Montageverbund insbesondere Bestandteil eines Scheinwerfers oder auch einer Rückleuchte des Kraftfahrzeugs sein.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein Längsschnitt durch einen erfindungsgemäßen Montageverbund im Bereich des Vorderwagens eines Kraftfahrzeugs und
- Fig. 2: eine Darstellung gemäß Ansicht II aus Fig. 1, wobei der Vorderwagen eines Kraftfahrzeugs von vorne ersichtlich ist.

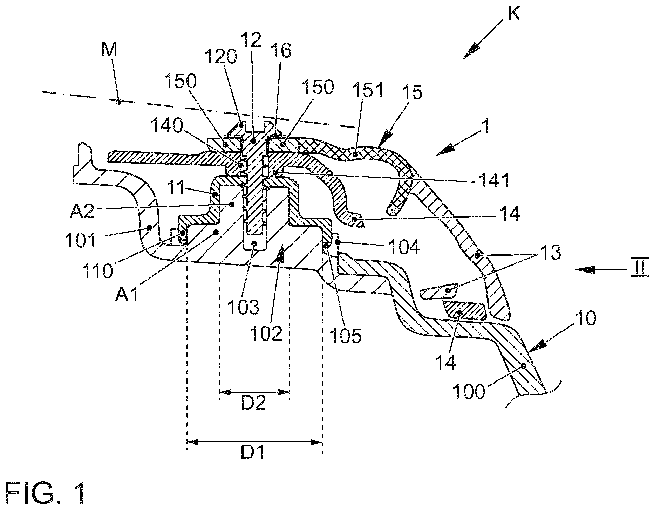

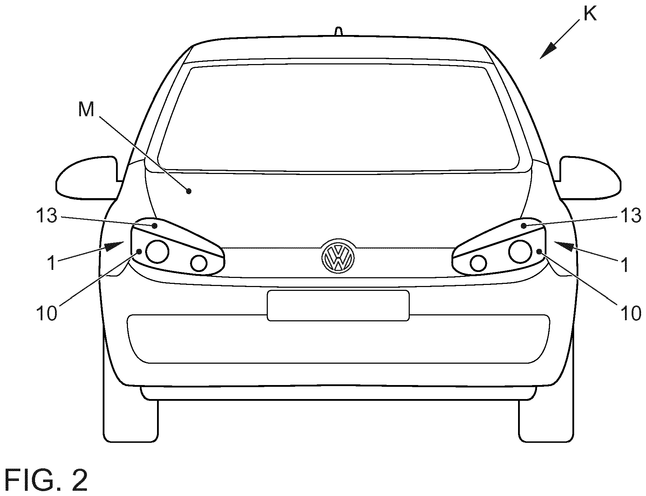

Es wird auf die Fig. 1 und 2 Bezug genommen.

Darin ist ein Kraftfahrzeug K ersichtlich, welches mit zwei erfindungsgemäßen Montageverbunden 1 als Bestandteil seiner Scheinwerfer ausgestattet ist.

Jeder Montageverbund 1 enthält eine Abschlussscheibe 10, an die über jeweils zwei Befestigungsdome 102 ein Anbauteil 13 im oberen Bereich der Abschlussscheibe 10 angebracht ist. Abweichend vom Ausführungsbeispiel können auch mehr oder weniger Befestigungsdome 102 vorhanden sein. Das Anbauteil 13 ist bevorzugt als Zierblende ausgestaltet.

Das Anbauteil 13 ist vorzugsweise aus Kunststoff (beispielsweise Polycarbonat) und zumindest auf seiner Sichtseite mit Aluminium bedampft. Dadurch wird ihm ein optisch ansprechendes, metallisches Aussehen verliehen. Wie ersichtlich, weist das Anbauteil 13 ein längliches, leistenartiges Aussehen auf.

Das Anbauteil 13 ist in nicht näher dargestellter Weise auf einen Träger 14 aufgeclipst.

Um konstruktionsbedingte Freiräume zwischen dem Anbauteil 13 und dem Träger 14 abzudecken, ist ein ebenso leistenartiges Dichtelement 15 vorhanden.

Das Dichtelement 15 weist eine harte Komponente 150 und eine weiche Komponente 151 auf, ist also ein Zweikomponenten-Bauteil. Mit dem Ende der weichen Komponente 151 stützt sich das Dichtelement 15 dichtend gegen eine Anlagefläche des Anbauteils 13 ab. Im Bereich der harten Komponente 150 wird das Dichtelement 15 zusammen mit dem Träger 14 an dem Befestigungsdom 102 unter Verwendung eines Befestigungselementes 12, das einen Kopf 120 aufweist, befestigt. Bevorzugt ist das Befestigungselement 12 als Schraube, der Kopf 120 des Befestigungselementes 12 als Schraubenkopf und der Befestigungsdom 102 als Schraubdom ausgeführt, so dass die Befestigung des Dichtelementes 15 zusammen mit dem Träger 14 an dem Befestigungsdom 102 durch Verschraubung erfolgt.

Die Abschlussscheibe 10 ist aus Kunststoff, vorzugsweise aus Polycarbonat hergestellt, und ist ebenfalls als ein Zweikomponenten-Bauteil ausgeführt. So weist die Abschlussscheibe 10 eine transparente Komponente 100 und eine an diese angespritzte schwarze Komponente 101 auf.

Im Bereich der schwarzen Komponente 101 ist der Befestigungsdom 102 vorhanden, welcher sich nach oben hin erstreckt. Insgesamt sind für die Befestigung des Anbauteils 13 zwei Befestigungsdome 102 eingesetzt.

Der Befestigungsdom 102 weist in einer Draufsicht von oben eine kreisrunde Form auf. Er wird durch einen ersten, umlaufenden Absatz A1 mit einem Durchmesser D1 und durch einen zweiten, umlaufenden Absatz A2 mit einem Durchmesser D2 gebildet.

Der Durchmesser D2 ist in etwa nur halb so groß wie der Durchmesser D1.

Wie aus der Fig. 1 ersichtlich, umfasst der Montageverbund 1 ein kappenartiges Element 11, welches der Außenkontur des Befestigungsdoms 102 angepasst ist und auf dem Befestigungsdom 102 aufliegt.

Gegen die Oberseite des kappenartigen Elementes 11 wird, bedingt durch die Befestigungskraft des Befestigungselementes 12, ein nach unten gerichteter, umlaufender Absatz 141 des Trägers 14 gedrückt.

Der umlaufende Absatz 141 umgibt dabei eine Durchgangsöffnung 140, die von dem Befestigungselement 12 durchdrungen wird.

Das Befestigungselement 12 greift in eine Befestigungsöffnung 103 hinein, welche konzentrisch von den Absätzen A1 und A2 umgeben ist.

Es ist erkennbar, dass zwischen dem Kopf 120 des Befestigungselementes 12 und dem Befestigungsdom 102 der umlaufende Absatz 141 des Trägers 14 und die harte Komponente 150 des Dichtelementes 15 angeordnet sind.

Der Träger 14 und das Dichtelement 15 werden durch den Kopf 120 des Befestigungselementes 12 in Richtung des auf dem Befestigungsdom 102 aufliegenden kappenartigen Elementes 11 gedrückt.

Zur Erhöhung der Schutzwirkung ist noch eine konzentrisch um den Befestigungsdom 102 umlaufende Rippe 104 einstückig an die Abschlussscheibe 10 angeformt. Die umlaufende Rippe 104 umgibt den Absatz A1 des Befestigungsdoms 102 konzentrisch, derart, dass eine rillenartige Vertiefung 105 ausgebildet wird.

Dabei nimmt die radiale Breite der Vertiefung 105 in Richtung zu ihrem Vertiefungsgrund hin ab. Die Abnahme kann beispielsweise konisch oder auch spitz zulaufend sein.

Hierdurch kann ein unterer Randbereich 110 des kappenartigen Elementes 11, welcher in die rillenartige Vertiefung 105 hineinragt, noch besser an die Außenkontur des Absatzes A1 angedrückt werden.

Alternativ ist auch denkbar, die um den Befestigungsdom 102 umlaufende Rippe 104 so auszubilden, dass sich der untere Randbereich 110 des kappenartigen Elementes 11 auf der Rippe 104 stirnseitig abstützen kann (nicht näher dargestellt, da nicht Teil der Erfindung). Der untere Randbereich 110 des kappenartigen Elementes 11 wird also bei Befestigung des Anbauteils 13 durch das Befestigungselement 12 auf diese Rippe 104 aufgedrückt und dadurch stirnseitig gequetscht. Dies führt gleichermaßen zu einer guten Abdichtung in diesem Bereich.

Das kappenartige Element 11 ist vorzugsweise aus einem gummielastischen Material.

Um oberseitig eine noch bessere Abdichtung zu erzielen, kann zwischen der Hartkomponente 150 des Dichtelementes 15 und dem Kopf 120 des Befestigungselementes 12 ein Dichtring 16, ebenfalls aus gummielastischem Material, eingesetzt werden.

Abweichend vom Ausführungsbeispiel kann der Befestigungsdom 102 auch eine andere Form aufweisen. Er kann in der Draufsicht beispielsweise auch oval ausgebildet sein. Auch ist eine abweichende Anzahl von Absätzen denkbar. Die Ausbildung gemäß dem Ausführungsbeispiel hat sich jedoch als besonders vorteilhaft erwiesen.

Die Erfindung ist nicht auf das bzw. die obigen Ausführungsbeispiele beschränkt. Diese wurden nur zur allgemeinen Erläuterung des Kerngedankens der Erfindung herangezogen. Die Erfindung kann im Rahmen der Ansprüche vielmehr auch andere als die zuvor beschriebenen Ausführungsbeispiele bzw. Ausprägungen annehmen.

### Bezugszeichenliste

- 1: Montageverbund einer Kraftfahrzeug-Beleuchtungseinrichtung

- 10: Abschlussscheibe
- 100: transparente Komponente der Abschlussscheibe
- 101: schwarze Komponente der Abschlussscheibe
- 102: Befestigungsdom
- 103: Befestigungsöffnung
- 104: umlaufende Rippe
- 105: rillenartige Vertiefung

- 11: kappenartiges Element
- 110: unterer Randbereich

- 12: Befestigungselement
- 120: Kopf des Befestigungselementes

- 13: Anbauteil

- 14: Träger für das Anbauteil
- 140: Durchgangsöffnung
- 141: umlaufender Absatz

- 15: Dichtelement
- 150: harte Komponente
- 151: weiche Komponente

- 16: Dichtring

- A1: erster Absatz
- A2: zweiter Absatz
- D1: Durchmesser des ersten Absatzes
- D2: Durchmesser des zweiten Absatzes
- K: Kraftfahrzeug
- M: Motorhaube

## Patentansprüche

1. Montageverbund (1) einer Kraftfahrzeug-Beleuchtungseinrichtung, mit einem an einer Abschlussscheibe (10) befestigten Anbauteil (13), wobei die Abschlussscheibe (10) zur zumindest mittelbaren Befestigung des Anbauteils (13) an ihrer Außenseite wenigstens einen angeformten Befestigungsdom (102) aufweist, in den ein Befestigungselement (12) eingreift, der wenigstens eine Befestigungsdom (102) mit einem kappenartigen Element (11) überdeckt ist, **dadurch gekennzeichnet, dass** das kappenartigen Element der Außenkontur des Befestigungsdoms (102) angepasst ist, wobei der Befestigungsdom (102), in einer Draufsicht gesehen, von einer um den Befestigungsdom (102) umlaufenden Rippe (104) umgeben ist, derart, dass eine umlaufende, rillenartige Vertiefung (105) ausgebildet wird, in die das kappenartige Element (11) teilweise (110) hineinragt.

2. Montageverbund (1) nach Anspruch 1, **dadurch gekennzeichnet, dass** die rillenartige Vertiefung (105) in ihrer Breite zum Vertiefungsgrund hin abnimmt.

3. Montageverbund (1) nach einem der vorhergehenden Ansprüche, **dadurch gekennzeichnet, dass** das Anbauteil (13) an einem Träger (14) befestigt ist, welcher durch das Befestigungselement (12) am Befestigungsdom (102) gehalten wird.

4. Montageverbund (1) nach Anspruch 3, **dadurch gekennzeichnet, dass** der Träger (14) mit einem dem Befestigungsdom (102) zugewandten, umlaufenden Absatz (141) versehen ist, welcher auf dem kappenartigen Element (11) aufliegt.

5. Montageverbund (1) nach Anspruch 3 oder 4, **dadurch gekennzeichnet, dass** durch das Befestigungselement (12) wenigstens ein Dichtelement (15) mit wenigstens einer harten (150) und wenigstens einer weichen (151) Komponente gehalten wird, wobei das Dichtelement (15) das Anbauteil (13) gegen den Träger (14) abdichtet und die harte Komponente (150) des Dichtelementes (15) zwischen einem Kopf (120) des Befestigungselementes (12) und dem kappenartigen Element (11) angeordnet ist.

6. Montageverbund (1) nach Anspruch 5, **dadurch gekennzeichnet, dass** zwischen dem Kopf (120) des Befestigungselementes (12) und der harten Komponente (150) des Dichtelementes (15) ein Dichtring (16) angeordnet ist.

7. Kraftfahrzeug (K) mit wenigstens einem Montageverbund (1) nach wenigstens einem der vorhergehenden Ansprüche.

## Claims

1. An assembly composite (1) of a motor vehicle lighting device, comprising an attachment (13) fastened to a front cover lens (10), the front cover lens (10) having at least one molded-on fastening dome (102) for at least indirectly fastening the attachment (13) to the outside thereof, in which fastening dome a fastening element (12) engages, the at least one fastening dome (102) being covered with a cap-like element (11), **characterized in that** the cap-like element is adapted to the outer contour of the fastening dome (102), the fastening dome (102) being surrounded, as seen in a plan view, by a rib (104) extending around the fastening dome (102) such that a circumferential groove-like depression (105) is formed, into which the cap-like element (11) partially (110) projects.

2. The assembly composite (1) according to claim 1, **characterized in that** the groove-like depression (105) decreases in width towards the depression base.

3. The composite assembly (1) according to either of the preceding claims, **characterized in that** the attachment part (13) is fastened to a support (14) which is held on the fastening dome (102) by the fastening element (12).

4. The assembly composite (1) according to claim 3, **characterized in that** the support (14) is provided with a circumferential shoulder (141) which faces the fastening dome (102) and rests on the cap-like element (11).

5. The assembly composite (1) according to either claim 3 or claim 4, **characterized in that** at least one sealing element (15) having at least one hard component (150) and at least one soft component (151) is held by the fastening element (12), the sealing element (15) sealing the attachment part (13) against the support (14), and the hard component (150) of the sealing element (15) being arranged between a head (120) of the fastening element (12) and the cap-like element (11).

6. The assembly composite (1) according to claim 5, **characterized in that** a sealing ring (16) is arranged between the head (120) of the fastening element (12) and the hard component (150) of the sealing element (15).

7. A motor vehicle (K) comprising at least one assembly composite (1) according to at least one of the preceding claims.

## Revendications

1. Ensemble de montage (1) d'un système d'éclairage de véhicule automobile, comprenant une pièce de fixation (13) fixée à un disque de fermeture (10), dans lequel le disque de fermeture (10) présente au moins un dôme de fixation moulé (102) pour la fixation au moins indirecte de la pièce de fixation (13) sur son côté externe, dôme dans lequel un élément de fixation (12) vient en prise, dans lequel l'au moins un dôme de fixation (102) est recouvert par un élément en forme de capuchon (11), **caractérisé en ce que** l'élément en forme de capuchon est adapté au contour externe du dôme de fixation (102), dans lequel le dôme de fixation (102), observé dans une vue de dessus, est entouré par une nervure (104) s'étendant autour du dôme de fixation (102), de sorte qu'un évidement périphérique en forme de rainure (105) soit formé, dans lequel l'élément en forme de capuchon (11) s'étend partiellement (110).

2. Ensemble de montage (1) selon la revendication 1, **caractérisé en ce que** l'évidement en forme de rainure (105) diminue en largeur jusqu'au fond de l'évidement.

3. Ensemble de montage (1) selon l'une quelconque des revendications précédentes, **caractérisé en ce que** la pièce de fixation (13) est fixée à un support (14), qui est maintenu sur le dôme de fixation (102) par le biais de l'élément de fixation (12).

4. Ensemble de montage (1) selon la revendication 3, **caractérisé en ce que** le support (14) est doté d'un épaulement périphérique (141) orienté vers le dôme de fixation (102), lequel repose sur l'élément en forme de capuchon (11).

5. Ensemble de montage (1) selon la revendication 3 ou 4,
**caractérisé en ce qu'**au moins un élément d'étanchéité (15) avec au moins un composant dur (150) et au moins un composant mou (151) est maintenu par le biais de l'élément de fixation (12), dans lequel l'élément d'étanchéité (15) ferme hermétiquement la pièce de montage (13) contre le support (14) et le composant dur (150) de l'élément d'étanchéité (15) est agencé entre une tête (120) de l'élément de fixation (12) et l'élément en forme de capuchon (11).

6. Ensemble de montage (1) selon la revendication 5,
**caractérisé en ce qu'**une bague d'étanchéité (16) est agencée entre la tête (120) de l'élément de fixation (12) et le composant dur (150) de l'élément d'étanchéité (15).

7. Véhicule automobile (K) comprenant au moins un ensemble de montage (1) selon au moins l'une quelconque des revendications précédentes.
